# EUROPEAN PATENT SPECIFICATION

(11) **EP 3 372 486 B1**
(45) Date of publication and mention of the grant of the patent: **18.09.2019**
(21) Application number: 17804788.2
(22) Date of filing: 15.06.2017
(51) Int. Cl.: B63C 11/52, B63G 8/16, B63G 8/22, B60F 3/00

(54) **ROLLING AND FLOATING COMBINED AMPHIBIOUS VEHICLE BASED ON INTERNAL DRIVE PRINCIPLE**
SCHWIMMENDES GEMISCHTES MULTI-HABITAT-ÜBERROLLTAUCHBOOT BASIEREND AUF EINEM EINGEBAUTEN ANTRIEBSPRINZIP
VÉHICULE AMPHIBIE COMBINÉ ROULANT ET FLOTTANT BASÉ SUR UN PRINCIPE D'ENTRAÎNEMENT INTERNE

(30) Priority: 19.01.2017 CN 201710037213
(43) Date of publication of application: 12.09.2018
(73) Proprietor: Hohai University, Nanjing, Jiangsu 211100 (CN)
(72) Inventor: XU, Pengfei, Nanjing Jiangsu 211100 (CN); ZHENG, Jinhai, Nanjing Jiangsu 211100 (CN); ZHANG, Guanqing, Nanjing Jiangsu 211100 (CN)
(74) Representative: Hoffmann Eitle
(86) International application number: PCT/CN2017/088401
(87) International publication number: WO 2018/133314

(56) References cited:
- CN-A- 1 565 875
- CN-A- 101 279 619
- CN-A- 101 318 549
- CN-A- 101 565 095
- CN-A- 103 129 337
- CN-A- 103 358 839
- CN-A- 103 358 839
- CN-A- 106 828 831
- CN-U- 203 698 464
- CN-U- 205 439 857
- DE-A1-102010 053 443
- US-A- 4 377 982
- US-A- 4 501 569
- US-B1- 9 428 019

## Description

### Technical field

The present invention relates to the technical field of submersible and more particularly to the roll-over floating mixed multi-habitat submersible based on built-in driving principle.

### Background technique

Diving as one of the main technical means for human to develop and utilize ocean has become an important frontier of marine high technology. A large number of submersibles have emerged, including HOV, ROV and AUV. These submersibles, like AUV, can at most cruise in the near sea bottom or wait in the base for order and can not freely move in the sea bed. Crawler-type ROV that can be operated on the seabed requires umbilical cable water surface power supply, thus amphibious autonomous submersible with functions of seabed movement and water floating hasn't yet appeared.

The traditional unmanned submersible mainly consists of frame, slender rotor and their combination. The state of movement is floating in the water. Crawler or wheel drive unit features large traction load, cumbersome and unstable quality.

An example of the prior art can be seen in document CN 1 565 875A which represents the closest prior art. Document CN 1 565 875A shows a ball-shaped vehicle comprises an inner ball equipped with balance blocks, an engine connecting to a transmission mechanism via a transmission rod, an outer ball equipped with a gear transmission structure connecting to two ends of the main shaft of the transmission mechanism in inner ball. The ball-shaped vehicle has advantages of simple structure, low energy consumption and so on.

Other examples can be seen in documents CN 101 318 549 A and CN 103 358 839A.

### Contents of the invention

It is an object of the present invention to overcome the shortcomings of the prior art and to provide a roll-over floating mixed multi-habitat submersible based on built-in driving principle that can float in the water body, move at the bottom of the water body and move on the land so as to realize the ability of interdisciplinary activity, and also to make the laying and recycling simple.

In order to solve the problems of the prior art, the present invention discloses a roll-over floating mixed multi-habitat submersible based on built-in driving principle comprising a outer spherical shell, a propulsion unit, an inner spherical shell, a rolling power unit, a buoyancy adjusting unit and a driving steering unit;

The outer spherical shell has a spherical outer wall and the inner spherical shell has a spherical inner wall; the inner spherical shell can be set in the outer spherical shell rotating in a first axis direction relative to the outer spherical shell; the roller power unit can be set in the inner spherical shell, capable of rotating around a second axis to generate an eccentric moment to advance or retract the submersible; the buoyancy adjusting unit and the steering unit are installed in the space between the outer spherical shell and the inner spherical shell, wherein the buoyancy adjusting unit is capable of causing the submersible to sink or float in the water body, and the steering unit is capable of driving the inner spherical shell to rotate relative to the outer spherical shell; the first axis is perpendicular to the second axis.

Furthermore, the rolling power unit comprises a turret, rollers, a drive motor, a controller and a battery pack; the rollers are respectively mounted on opposite sides of the turret and in rolling contact with the spherical inner wall. The drive motor drives one of the rollers so that the turret is movable relative to the inner spherical shell; the controller is electrically connected to the drive motor and the battery is electrically connected to the controller and the drive motor, respectively;

Wherein, the drive motor and the battery are eccentrically mounted on the turret so that the rolling power unit generates an eccentric moment.

Furthermore, the turret comprises: a central support and a resilient support; the rollers are mounted on the central support and the resilient support; the resilient support is resiliently connected to the central support by means of a spring in the direction of the center line of both sides of the roller so that the both side rollers are always in contact with the spherical inner wall.

Furthermore, the buoyancy adjusting unit comprises a drain tank, a water pump and an integrated valve group; the water is drawn into or discharged in the drain tank through the water pump and the valve group. Furthermore, the drain tank is in the form of a tubular annular structure set up in a circumference of the said inner spherical shell.

Furthermore, the steering means comprises a steering gear ring, a steering gear and a steering motor; the steering gear ring is set on the outer wall of the inner spherical shell, the steering motor is provided on the inner wall of the outer spherical shell, and the steering gear is provided on the rotating shaft of the steering motor and meshing with the steering gear ring.

Furthermore, the outer spherical shell has a mounting portion for projecting an outer wall thereof at both ends in its diameter direction, and pushing units being respectively provided on each of the mounting portions.

Furthermore, the number of propulsion units on each mounting portion is two which are arranged symmetrically with vertical line at an angle of 90 °

Furthermore, the number of propulsion units on each mounting portion is one which is capable of ±90° rotatably provided on the mounting portion

Furthermore, the outer wall of said outer spherical shell is distributed with a plurality of convex structures or groove texture structure to increase underwater friction.

The present invention has the beneficial effect that it can not only float in the water body and move at the bottom of the water body, but also be able to move on land to realize the ability of interdisciplinary activity, and also to make the laying and recycling simple.

### Description of the drawings

Fig. 1 is a structural perspective view of a preferred embodiment of the present invention;
Fig. 2 is a perspective exploded view of the embodiment shown in Fig. 1;
Fig. 3 is a front view of the structure of the embodiment shown in Fig. 1;
Fig. 4 is a structural side view of the embodiment shown in Fig. 1;
Fig. 5 is a structural perspective view of the rolling power unit of the embodiment shown in Fig. 1;
Fig. 6 is a front view of the structure of the rolling power unit of the embodiment shown in Fig. 1;
Fig. 7 is a structural side view of the rolling power unit in the embodiment shown in Fig. 1;
Fig. 8 is a schematic diagram of the motion of the rolling power unit in the embodiment shown in Fig. 1;
Fig. 9 is a top plan view of the structure of the steering unit in the embodiment shown in Fig. 1;
Fig. 10 is a front view of the structure of a propulsion unit according to another preferred embodiment of the present invention;
Fig. 11 is a front view of the structure of the propulsion unit in the embodiment shown in Fig. 10;

### Reference:

1 outer spherical shell; 1.1 mounting part; 1.2 convex structure; 2 propulsion unit; 3 support frame; 4 inner spherical shell; 5 roller;6 steering gear; 7 drive motor; 8 center support; 9 elastic support; 10 spring; 11 steering gear.

### Detailed description

The invention will now be described further with reference to the accompanying drawings. The following examples are merely illustrative of the technical aspects of the present invention and are not intended to limit the scope of the invention.

### Embodiment 1

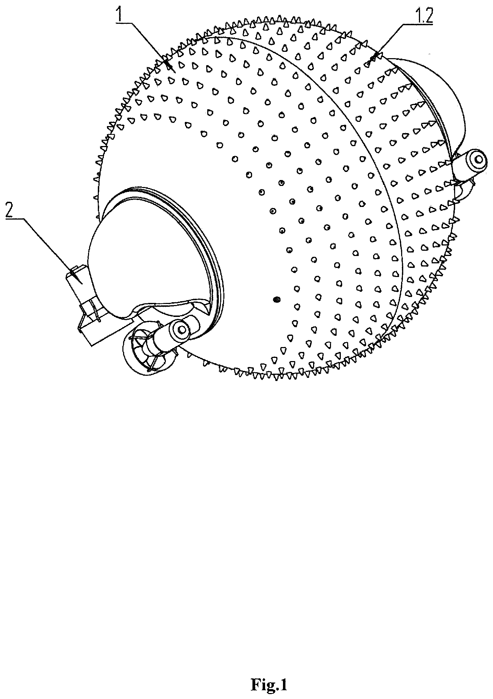

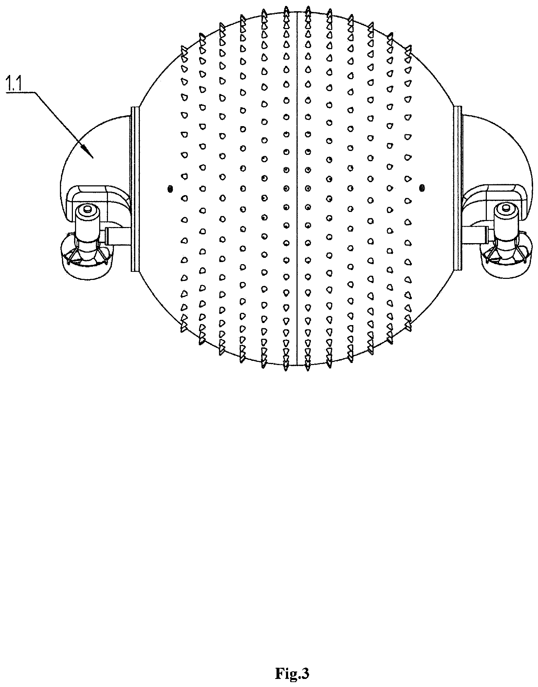

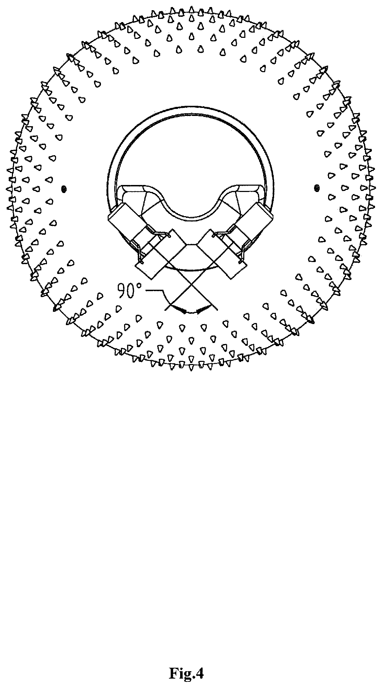

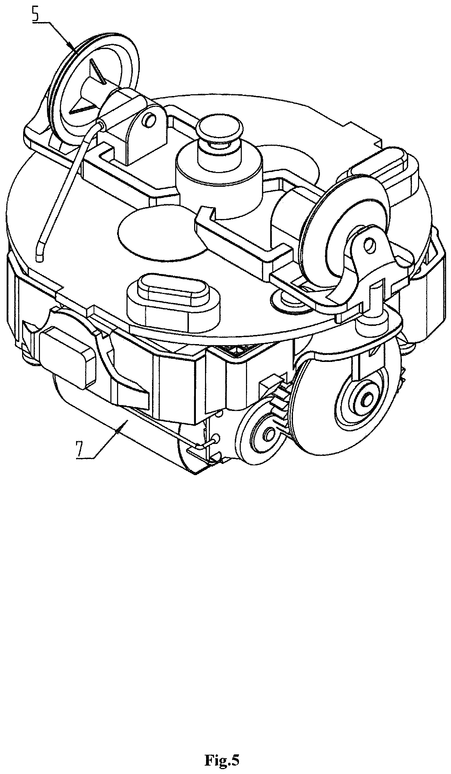

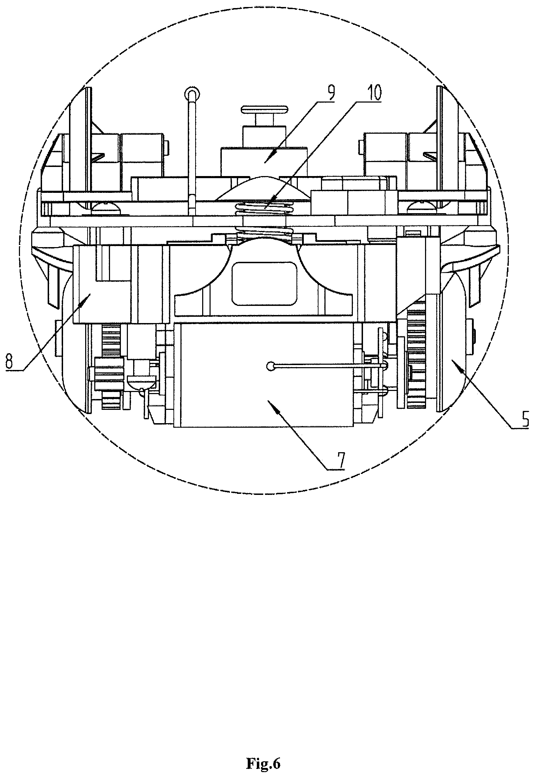

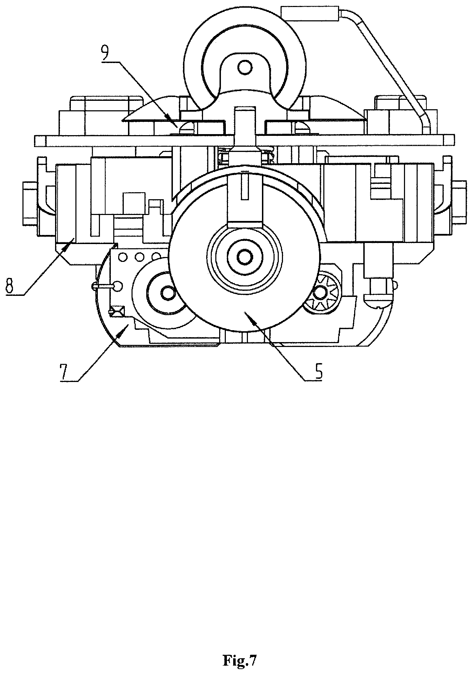

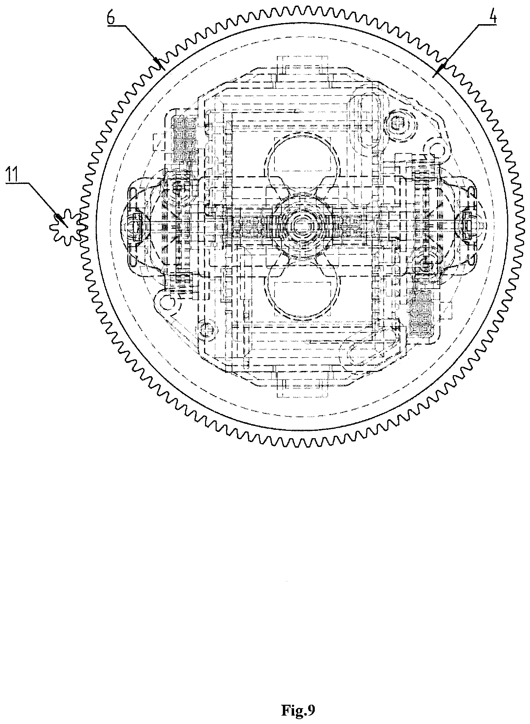

As shown in Figs. 1 to 9, a roll-over floating mixed multi-habitat submersible comprises spherical shell 1, propulsion unit 2, inner spherical shell 4, rolling power unit, buoyant force adjusting unit and steering unit. In particular, in order to facilitate better contact and movement with the bottom of the water bodyor land, the outer spherical shell 1 is a spherical housing. Its inner and outer walls are spherical. The outer wall is distributed with a number of convex structure 1.2 or similar tires groove texture structure.

For better fixing of the inner spherical shell 4 in the outer spherical shell 1 and for facilitating the better generation of the eccentric torque of rolling power unit, inner spherical shell 4 is also spherical shell and the inner and outer walls are spherical. The inner spherical shell 4 is set in the inner spherical shell 1 concentrically through a support frame 3 and is rotatable relative to the outer spherical shell 1 about the first shaft. Rolling power unit is set in the inner spherical shell 4, buoyancy adjusting unit and the steering unit are installed in the space between the outer spherical shell 1 and the inner spherical shell 4.

Theeccentric torque generated by rolling power unit is equipped with the structure: the rolling power unit comprising a turret, a roller 5, a drive motor 7, a controller and a battery. The roller 5 is mounted on the opposite sides of the turret, and the roller 5 is in rolling contact with the inner wall of the inner spherical shell 4 and the drive motor 7 drives the roller 5 on one side thereof so that the turret can be rotated about the second axis of the inner spherical shell 4. The controller is electrically connected to the drive motor 7 to control the drive motor 7 to perform the forward / reverse control. The battery is connected respectively with the controller and the drive motor 7 electrically to supply power thereto. The drive motor 7 and the battery are used as components of high quality in the rolling power unit and are thus eccentrically mounted on the turret as a weight so that the eccentric torque can be generated when the turret is rotated.

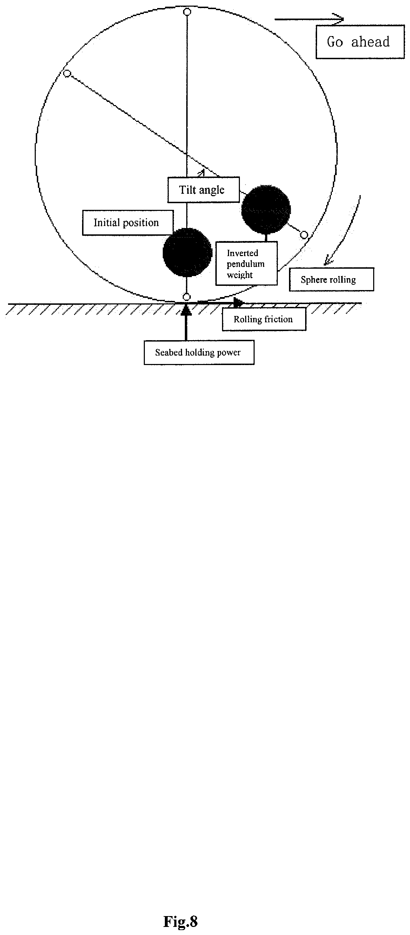

As shown in Fig. 8, the inner spherical shell 4 and the outer spherical shell 1 are regarded as a complete sphere and the actionpoint of the sphere and the surface supporting the sphere is the supporting point. Regard the drive motor 7 and battery as inverted pendulum, under the action of gravity, in the sphere bottom. When the drive motor 7 is operated to rotate the inverted pendulum relative to the sphere, the inverted weight forms a torque relative to the supporting point which drives the ball in the reverse direction and then pendulum returns to the initial position. During the rotation of the sphere, the friction supporting surface simultaneously drives the sphere forward. Repeat the process to continuously roll the sphere.

In order to enable the roller 5 to always contact the inner wall of the inner spherical shell 4 during rotation, the turret is divided into two parts which are movable, one part is the center support 8 and the other part is the elastic support 9. The pair of rollers 5 mounted on center support 8 are driven by drive motor 7, respectively.

The elastic support 9 is elastically connected along the center line of both sides roller 5 through the spring 10 and center support 8. The spring 10 makes elastic support 9 have a tendency to move outwardly relative to the center support 8, so that both sides of the roller 5 are always movable against the inner wall of the inner spherical shell 4.

The buoyant adjustment unit that changes submersible position in the water has a structure: the buoyant adjustment comprises a dosing tank, a water pump and an integrated valve group. The water pump adopts a one-way pump, the water is sucked or discharged by the water pump and the valve group in the drain tank which is a tubular annular structure and is arranged around the outer circumference of the inner spherical shell 4 so that the distribution of the weight of the water can have a uniform distribution of the weight to affect the eccentric torque.

When the one-way pump is turned on, the water is automatically sucked into the drain tank by means of the water pressure. The weight of the submersible increases and exceeds its buoyancy to sink to the bottom of the water body. At this time, the movement at the bottom of the water body is achieved by rolling the power unit. After a portion of the water is discharged from the drain tank, the weight of the submersible falls and is equal to its buoyancy so that the submersible floats in the water body, and the submersible movement is achieved by the propulsion device 2. One-way pump works reversely to further discharge the water and the weight of the submersible is less than its buoyancy and thus rise to the surface to achieve the recovery of the submersible.

The steering unit that achieves the pivot steering is equipped with the structure: steering device comprises a steering gear 6, a steering gear 11 and a steering motor. The steering gear 6 is provided on the outer wall of the inner spherical shell 4 with its axis of rotation collinear with the first axis, set along the equatorial line of the inner spherical shell. The steering motor is provided on the inner wall of the outer spherical shell 1 and the steering gear 11 is set on the rotating shaft of the steering motor and engaged with the steering gear 6.

After the steering of the steering motor, the inner spherical shell 4 and its inner rolling power unit can revolve to a certain angle relative to its original position, then the submersible will move along the new direction in the water bottom or on the land.

The propulsion unit 2 is installed in a symmetrical manner and the outer spherical shell 1 has, at its both ends, in its diameter direction, the mounting portion 1.1 protruding its outer wall. The propulsion unit 2 is provided on each mounting portion 1.1. The present invention has two types of propulsion unit 2, in particular:
The number of the propulsion unit 2 on each of the mounting portion 1.1 is two, and the two propulsion units 2 on the same mounting portion 1.1 are opposed to each other at an angle of 90 °. This installation ensures that the submersible provides a progressive, floating and three-degree-of-freedom thrust when rolling at any angle to achieve an emergency float.

### Embodiment 2

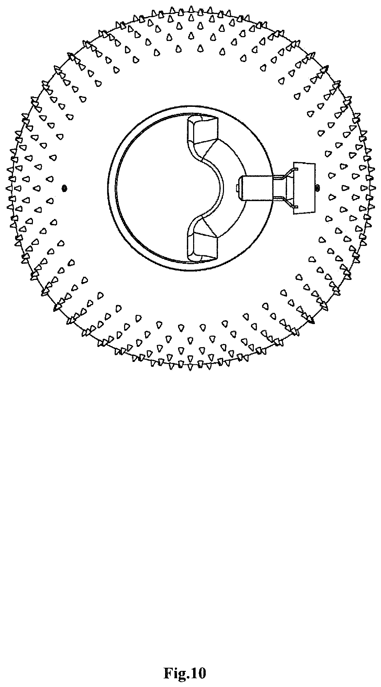

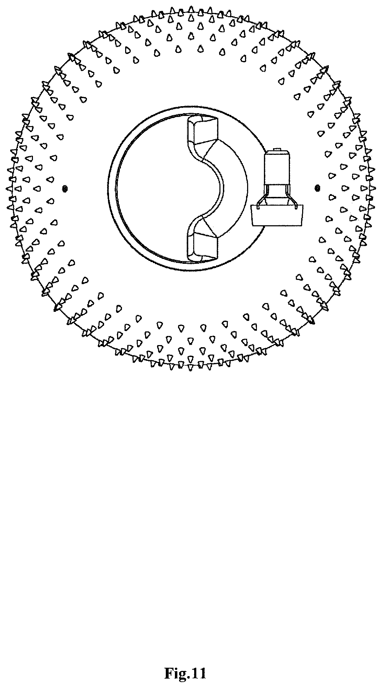

As shown in Figs. 10 and 11, the difference from the first embodiment is that in the present embodiment, the number of the propulsion unit is 2 and the propulsion unit 2 is ±90° rotatably provided on the mounting portion 1.1. Under normal situation, the two-side propulsion unit 2 is arranged horizontally to generate a forward drive thrust. In addition, the propulsion unit 2 can be further rotated to a vertical state to produce a floating, dive thrust. The mounting portion has a streamlined structure and is made of a transparent material to facilitate observation of the internal structure of the submersible.

### Embodiment 3

It differs from Embodiment 1 in that in the present embodiment, the water pump uses a bidirectional pump to effect water intake and drainage.

In order to prevent the nozzle of the manifold from being clogged by the sludge, a nozzle can be provided on the mounting portion so as to reduce the contact of the nozzle with the bottom or land of the water body.

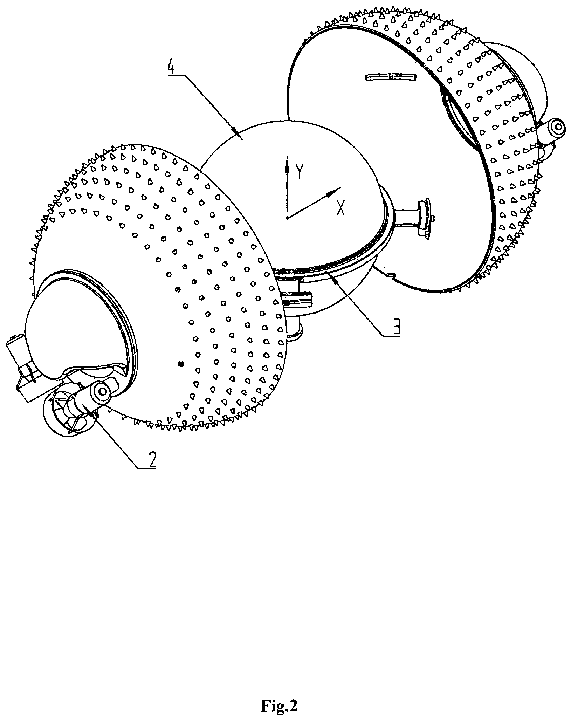

Whichever type of installation is used, the propulsion unit 2 will interfere with the movement of the divergent submersible. Therefore, the steering angle of the steering device may be set within the set range depending on the circumstances so as to avoid the interference effect of the propulsion unit 2 on the roll. In the present invention, the first axis is the Y-axis direction in Fig. 2, the second axis is the X-axis direction in Fig. 2, and the X-axis and the Y-axis are perpendicular to each other.

The submersible can be laid by the mother ship, or even rolled from the shore into the water or release from the air. With the action of its buoyant adjustment unit, it sinks into the bottom of the water body for rolling or floating movement. After the task is completed, it can roll back to mother ship from the bottom of water, which subverts the current traditional way of laying and recovering by using the deck to lay down. It plays an important role in offshore surveys, underwater observation, marine pasture monitoring, seabed long-term guarding and so on.

The foregoing is merely a preferred embodiment of the present invention and it should be noted that it will be apparent to those skilled in the art that various modifications and variations can be made without departing from the technical principles of the invention. These modification and variation should also be regarded as the scope of protection of the present invention.

## Claims

1. A roll-over floating mixed multi-habitat submersible based on built-in driving principle comprises an outer spherical shell (1), a propulsion unit (2), an inner spherical shell (4), a rolling power unit, a buoyancy adjusting unit and a driving steering unit;
the said outer spherical shell (1) has a spherical outer wall and the said inner spherical shell (4) has a spherical inner wall; the said inner spherical shell (4) is set in the said outer spherical shell (1), capable of rotating around a first axis direction relative to the said outer spherical shell (1); the said rolling power unit is set in the said inner spherical shell (4), capable of rotating around a second axis to generate an eccentric moment to advance or retract the submersible; the said buoyancy adjusting unit and the said steering unit are installed in the space between the said outer spherical shell (1) and the inner spherical shell (4), wherein the said buoyancy adjusting unit is capable of causing the submersible to sink or float in the water body, and the said steering unit is capable of driving the inner spherical shell (4) to rotate relative to the outer spherical shell (1); the said first axis is perpendicular to the said second axis.

2. The said roll-over floating mixed multi-habitat submersible based on built-in driving principle according to claim 1 is characterized as: the rolling power unit comprising a turret, rollers (5), a drive motor (7), a controller and a battery pack; the said rollers (5) being respectively mounted on opposite sides of the said turret, the said rollers (5) being in rolling contact with the said spherical inner wall, the said drive motor (7) driving one of the rollers (5) so that the said turret is movable relative to the said inner spherical shell (4); the said controller being electrically connected to the said drive motor (7), the said battery being electrically connected to the said controller and the said drive motor (7), respectively;
wherein, the said drive motor (7) and the battery are eccentrically mounted on the turret so that the rolling power unit generates an eccentric moment.

3. The said roll-over floating mixed multi-habitat submersible based on built-in driving principle according to claim 2 is characterized as: the said turret comprising: a central support and a resilient support; the said rollers (5) being mounted on the said central support and the resilient support; the said resilient support is resiliently connected to the said central support by means of a spring (10) in the direction of the center line of both sides of the roller (5) so that the both side rollers (5) are always in contact with the spherical inner wall.

4. The said roll-over floating mixed multi-habitat submersible according to claim 1 is characterized as: the buoyancy adjusting unit comprising a drain tank, a water pump and an integrated valve group; the water being drawn into or being discharged in the said injection and drainage tank through the said water pump and the said valve group.

5. The said roll-over floating mixed multi-habitat submersible based on built-in driving principle according to claim 4 is characterized as: the said drain tank being in the form of a tubular annular structure set up in a circumference of the said inner spherical shell (4).

6. The said roll-over floating mixed multi-habitat submersible based on built-in driving principle according to claim 1 is characterized as: the said steering means comprising a steering gear ring, a steering gear and a steering motor; the said steering gear ring being set on the outer wall of the said inner spherical shell (4), the said steering motor being provided on the inner wall of the outer spherical shell (1), and the said steering gear being provided on the rotating shaft of the said steering motor and meshing with the steering gear ring.

7. The said roll-over floating mixed multi-habitat submersible based on built-in driving principle according to claim 1 is characterized as: the said outer spherical shell (1) having a mounting portion for projecting an outer wall thereof at both ends in its diameter direction, and pushing units being respectively provided on each of the mounting portions.

8. The said roll-over floating mixed multi-habitat submersible based on built-in driving principle according to claim 7 is characterized as: the number of propulsion units (2) on each mounting portion being two which are arranged symmetrically with vertical line at an angle of 90 °.

9. The said roll-over floating mixed multi-habitat submersible based on built-in driving principle according to claim 7 is characterized as: the number of propulsion units (2) on each mounting portion being one which is capable of ±90° rotatably provided on the mounting portion.

10. The said roll-over floating mixed multi-habitat submersible based on built-in driving principle according to anyone of claims 1-9 is characterized as: the said outer wall of said outer spherical shell (1) being distributed with a plurality of convex structures or groove texture structure to increase underwater friction.

## Patentansprüche

1. Schwimmendes gemischtes Multihabitat-Überrolltauchboot, das auf einem eingebauten Antriebskonzept basiert, das eine äußere kugelförmige Kapsel (1), eine Schubeinheit (2), eine innere kugelförmige Kapsel (4), eine Rollleistungseinheit, eine Auftriebseinstelleinheit und eine Antriebslenkeinheit umfasst;
wobei die äußere kugelförmige Kapsel (1) eine kugelförmige äußere Wand aufweist, und die innere kugelförmige Kapsel (4) eine kugelförmige innere Wand aufweist; wobei die innere kugelförmige Wand (4) in die äußere kugelförmige Kapsel (1) eingesetzt ist, die fähig ist, um eine erste Achsenrichtung bezüglich der äußeren kugelförmigen Kapsel (1) zu drehen; wobei die Rollleistungseinheit in der inneren kugelförmigen Kapsel (4) eingesetzt ist, die fähig ist, sich um eine zweite Achse zu drehen, um ein exzentrisches Moment zum Vorwärtstreiben oder Zurückziehen des Tauchboots zu erzeugen; wobei die Auftriebseinstelleinheit und die Lenkeinheit in dem Raum zwischen der äußeren kugelförmigen Kapsel (1) und der inneren kugelförmigen Kapsel (4) installiert sind, wobei die Auftriebseinstelleinheit fähig ist, das Tauchboot zu veranlassen, in dem Gewässer zu sinken oder zu schwimmen, und wobei die Lenkeinheit fähig ist, die innere kugelförmige Kapsel (4) anzutreiben, um sich bezüglich der äußeren kugelförmigen Kapsel (1) zu drehen; wobei die erste Achse zu der zweiten Achse senkrecht steht.

2. Schwimmendes gemischtes Multihabitat-Überrolltauchboot, das auf einem eingebauten Antriebskonzept basiert, nach Anspruch 1, **dadurch gekennzeichnet, dass**: die Rollleistungseinheit einen Turm, Rollen (5), einen Antriebsmotor (7), eine Steuervorrichtung und ein Batteriepack umfasst; wobei die Rollen (5) jeweils auf entgegengesetzten Seiten des Turms montiert sind, wobei die Rollen (5) in Rollberührung mit der kugelförmigen inneren Wand sind, wobei der Antriebsmotor (7) eine der Rollen (5) derart antreibt, dass der Turm bezüglich der inneren kugelförmigen Kapsel (4) bewegbar ist; wobei die Steuervorrichtung elektrisch mit dem Antriebsmotor (7) verbunden ist, die Batterie elektrisch jeweils mit der Steuervorrichtung und dem Antriebsmotor (7) verbunden ist;
wobei der Antriebsmotor (7) und die Batterie derart exzentrisch auf dem Turm montiert sind, dass die Rollleistungseinheit ein exzentrisches Moment erzeugt.

3. Schwimmendes gemischtes Multihabitat-Überrolltauchboot, das auf einem eingebauten Antriebskonzept basiert, nach Anspruch 2, **dadurch gekennzeichnet, dass**: der Turm Folgendes umfasst: einen zentralen Träger und einen federnden Träger; wobei die Rollen (5) auf dem zentralen Träger und dem federnden Träger montiert sind; der federnde Träger federnd mit dem zentralen Träger mittels einer Feder (10) in die Richtung der Mittenlinie beider Seiten der Rolle (5) derart verbunden ist, dass die Rollen (5) auf beiden Seiten jederzeit mit der kugelförmigen inneren Wand in Berührung sind.

4. Schwimmendes gemischtes Multihabitat-Überrolltauchboot nach Anspruch 1, **dadurch gekennzeichnet, dass**: die Auftriebseinstelleinheit einen Ablasstank, eine Wasserpumpe und eine eingebaute Ventilgruppe umfasst; das Wasser durch die Wasserpumpe und die Ventilgruppe in den Einspritz- und Ablasstank angesaugt oder daraus ausgelassen wird.

5. Schwimmendes gemischtes Multihabitat-Überrolltauchboot, das auf einem eingebauten Antriebskonzept basiert, nach Anspruch 4, **dadurch gekennzeichnet, dass**: der Ablasstank in Form einer röhrenförmigen ringförmigen Struktur ist, die in einem Umfang der inneren kugelförmigen Kapsel (4) eingesetzt ist.

6. Schwimmendes gemischtes Multihabitat-Überrolltauchboot, das auf einem eingebauten Antriebskonzept basiert, nach Anspruch 1, **dadurch gekennzeichnet, dass**: die Lenkmittel einen Lenkgetriebezahnkranz, ein Lenkgetriebe und einen Lenkmotor umfassen; wobei der Lenkgetriebezahnkranz auf der äußeren Wand der inneren kugelförmigen Kapsel (4) eingesetzt ist, wobei der Lenkmotor auf der inneren Wand der äußeren kugelförmigen Kapsel (1) bereitgestellt ist, und das Lenkgetriebe auf der Drehwelle des Lenkmotors und in den Lenkgetriebezahnkranz eingreifend bereitgestellt ist.

7. Schwimmendes gemischtes Multihabitat-Überrolltauchboot, das auf einem eingebauten Antriebskonzept basiert, nach Anspruch 1, **dadurch gekennzeichnet, dass**: die äußere kugelförmige Kapsel (1) einen Montageabschnitt aufweist, damit eine Außenwand davon an beiden Enden in ihre Durchmesserrichtung vorragt, und Schiebeeinheiten, die jeweils auf jedem der Montageabschnitte bereitgestellt sind.

8. Schwimmendes gemischtes Multihabitat-Überrolltauchboot, das auf einem eingebauten Antriebskonzept basiert, nach Anspruch 7, **dadurch gekennzeichnet, dass**: die Anzahl von Schubeinheiten (2) auf jedem Montageabschnitt zwei beträgt, die symmetrisch zu der vertikalen Linie an einem Winkel von 90° eingerichtet sind.

9. Schwimmendes gemischtes Multihabitat-Überrolltauchboot, das auf einem eingebauten Antriebskonzept basiert, nach Anspruch 7, **dadurch gekennzeichnet, dass**: die Anzahl von Schubeinheiten (2) auf jedem Montageabschnitt eins beträgt, die fähig ist, um ±90° drehbar auf dem Montageabschnitt bereitgestellt zu sein.

10. Schwimmendes gemischtes Multihabitat-Überrolltauchboot, das auf einem eingebauten Antriebskonzept basiert, nach einem der Ansprüche 1-9, **dadurch gekennzeichnet, dass**: die auf der äußeren Wand der äußeren kugelförmigen Kapsel (1) eine Vielzahl von konvexen Strukturen oder Nuttexturstruktur verteilt ist, um Unterwasserreibung zu erhöhen.

## Revendications

1. Submersible multi-habitat mixte flottant et roulant basé sur un principe d'entraînement intégré comprend une coque sphérique externe (1), une unité de propulsion (2), une coque sphérique interne (4), une unité de puissance de roulage, une unité de réglage de flottabilité et une unité d'entrainement et de direction ;
ladite coque sphérique externe (1) a une paroi externe sphérique et ladite coque sphérique interne (4) a une paroi interne sphérique ; ladite coque sphérique interne (4) est agencée dans ladite coque sphérique externe (1), capable de tourner autour d'une première direction axiale par rapport à ladite coque sphérique externe (1) ; ladite unité de puissance de roulage est agencée dans ladite coque sphérique interne (4), capable de tourner autour d'un second axe pour générer un moment excentrique pour faire avancer ou reculer le sous-marin ; ladite unité de réglage de flottabilité et ladite unité de direction sont installées dans l'espace entre ladite coque sphérique externe (1) et la coque sphérique interne (4), dans lequel ladite unité de réglage de flottabilité est capable d'amener le submersible à couler ou à flotter sur le corps d'eau, et ladite unité de direction est capable d'entraîner l'enveloppe sphérique interne (4) à tourner par rapport à l'enveloppe sphérique externe (1) ; ledit premier axe est perpendiculaire audit second axe.

2. Submersible multi-habitat mixte flottant et roulant basé sur un principe d'entraînement intégré selon la revendication 1, **caractérisé en ce que** : l'unité de puissance de roulage comprend une tourelle, des rouleaux (5), un moteur d'entraînement (7), un dispositif de commande et un bloc de batterie ; lesdits rouleaux (5) étant montés respectivement sur des côtés opposés de ladite tourelle, lesdits rouleaux (5) étant en contact roulant avec ladite paroi sphérique interne, ledit moteur d'entraînement (7) entraînant l'un des rouleaux (5) de sorte que ladite tourelle est mobile par rapport à ladite coque sphérique interne (4) ; ledit dispositif de commande étant connecté électriquement audit moteur d'entraînement (7), ladite batterie étant connectée électriquement audit dispositif de commande et audit moteur d'entraînement (7), respectivement ;
dans lequel ledit moteur d'entraînement (7) et la batterie sont montés de manière excentrique sur la tourelle de sorte que l'unité de puissance de roulage génère un moment excentrique.

3. Submersible multi-habitat mixte flottant et roulant basé sur un principe d'entraînement intégré selon la revendication 2, **caractérisé en ce que** : ladite tourelle comprend : un support central et un support élastique ; lesdits rouleaux (5) étant montés sur ledit support central et sur le support élastique ; ledit support élastique est connecté de manière élastique audit support central au moyen d'un ressort (10) dans la direction de la ligne médiane des deux côtés du rouleau (5), de sorte que les rouleaux (5) des deux côtés sont toujours en contact avec la paroi sphérique interne.

4. Submersible multi-habitat mixte flottant et roulant revendication 1, **caractérisé en ce que** : l'unité de réglage de flottabilité comprend un réservoir de drainage, une pompe à eau et un groupe de vannes intégré ; l'eau étant aspirée ou évacuée dans ledit réservoir d'injection et de drainage à travers ladite pompe à eau et ledit groupe de vannes.

5. Submersible multi-habitat mixte flottant et roulant basé sur un principe d'entraînement intégré selon la revendication 4, **caractérisé en ce que** : ledit réservoir de drainage se présente sous la forme d'une structure annulaire tubulaire établie dans une circonférence de ladite coque sphérique interne (4).

6. Submersible multi-habitat mixte flottant et roulant basé sur un principe d'entraînement intégré selon la revendication 1, **caractérisé en ce que** : ledit moyen de direction comprend une couronne dentée de direction, un engrenage de direction et un moteur de direction ; ladite couronne dentée de direction étant fixée sur la paroi externe de ladite coque sphérique interne (4), ledit moteur de direction étant prévu sur la paroi interne de la coque sphérique externe (1), et ledit mécanisme de direction étant prévu sur l'arbre de rotation dudit moteur de direction et engrenant avec la couronne dentée de direction.

7. Submersible multi-habitat mixte flottant et roulant basé sur un principe d'entraînement intégré selon la revendication 1, **caractérisé en ce que** : ladite coque sphérique externe (1) présente une partie de montage prévue pour qu'une paroi externe de celle-ci fasse saillie aux deux extrémités dans sa direction de diamètre, et des unités de poussée étant prévues respectivement sur chacune des parties de montage.

8. Submersible multi-habitat mixte flottant et roulant basé sur un principe d'entraînement intégré selon la revendication 7, **caractérisé en ce que** : le nombre d'unités de propulsion (2) sur chaque partie de montage étant deux qui sont agencées symétriquement avec une ligne verticale sur un angle de 90°.

9. Submersible multi-habitat mixte flottant et roulant basé sur un principe d'entraînement intégré selon la revendication 7, **caractérisé en ce que** : le nombre d'unités de propulsion (2) sur chaque partie de montage étant une qui est capable d'être fournie de manière rotative sur ± 90° sur la partie de montage.

10. Submersible multi-habitat mixte flottant et roulant basé sur un principe d'entraînement intégré selon l'une quelconque des revendications 1 à 9, **caractérisé en ce que** : ladite paroi externe de ladite coque sphérique externe (1) est distribuée avec une pluralité de structures convexes ou une structure à texture rainurée pour augmenter le frottement sous-marin.
